# EUROPÄISCHE PATENTSCHRIFT

(11) **EP 2 883 653 B1**
(45) Veröffentlichungstag und Bekanntmachung des Hinweises auf die Patenterteilung: **13.07.2016**
(21) Anmeldenummer: 14195562.5
(22) Anmeldetag: 01.12.2014
(51) Int. Cl.: B23P 19/06, B25B 29/02, F16B 31/04

(54) **Spannvorrichtung zum Dehnen eines Gewindebolzens**
Tensioning device for tensioning a threaded bolt
Dispositif de tensionement pour le serrage d'un boulon fileté

(30) Priorität: 13.12.2013 DE 102013113982
(43) Veröffentlichungstag der Anmeldung: 17.06.2015
(73) Patentinhaber: Hohmann, Jörg, 59872 Meschede (DE); Hohmann, Frank, 59581 Warstein (DE)
(72) Erfinder:
(74) Vertreter: Bungartz Christophersen Partnerschaft mbB Patentanwälte

(56) Entgegenhaltungen:
- WO-A1-2006/027060
- WO-A1-2010/054959
- CN-U- 202 517 262
- DE-A1- 4 300 664
- DE-A1-102007 005 284

## Beschreibung

Die Erfindung betrifft eine Spannvorrichtung zum Dehnen eines Gewindebolzens durch Zug an dessen Gewindeendabschnitt, mit einem gegen eine den Gewindebolzen umgebende Unterlage als Widerlager abgestützten Stützrohr, einem in Verlängerung des Stützrohrs angeordneten Zylindergehäuse mit mindestens einem darin in Längsrichtung bewegbaren, mit einer Hydraulikversorgung verbindbaren Kolben, einer durch den Kolben axial mitnehmbar ausgebildeten Wechselbuchse, welche zum Verschrauben mit dem Gewindeendabschnitt des Gewindebolzens mit einem Innengewinde, und zum axialen Mitnehmen durch den Kolben mit einem radial erweiterten Abschnitt versehen ist, einer um die Wechselbuchse herum angeordneten und den Kolben axial beaufschlagenden Federanordnung, und einem an dem Zylindergehäuse befestigten Deckel, an dessen Unterseite die andere Abstützung der Federanordnung ausgebildet ist.

Gattungsgemäße Spannvorrichtungen für Gewindebolzen sind aus der WO 2008/092768 A2 und der CN 202 517 262 U bekannt. Aus CN 202 517 262 U ist eine Spannvorrichtung gemäß dem Oberbegriff von Anspruch 1 bekannt. Zum Dehnen des Gewindebolzens ist in dem Zylindergehäuse der Spannvorrichtung eine Wechselbuchse angeordnet, die an ihrem unteren Ende mit einem Innengewinde zum Verschrauben mit dem Gewindebolzen versehen ist. Die Wechselbuchse ist durch einen hydraulisch beaufschlagten Kolben der Spannvorrichtung axial mitnehmbar, und hierzu mit einem radial erweiterten Flansch bzw. Bund versehen. Eine um die Wechselbuchse herum angeordnete Federanordnung stützt sich von oben her gegen die Wechselbuchse bzw. gegen den Kolben ab. Die andere Abstützung der Federanordnung befindet sich an der Unterseite eines an dem Zylindergehäuse befestigen Deckels. Dieser ist im Fall der WO 2008/092768 A2 so gestaltet, dass er zusätzlich eine Schutzfunktion auszuüben vermag. Denn er verhindert, dass im Falle eines Versagens der Wechselbuchse diese nach oben weggeschleudert werden kann. Ein Austausch der Wechselbuchse ist zwar möglich, erfordert aber unter anderem das Entfernen der Federanordnung. Dieser Austausch geht im Fall der Spannvorrichtung nach der CN 202 517 262 U einfacher vonstatten, allerdings fehlen Maßnahmen für den Fall eines Versagens der Wechselbuchse.

Auch bei einer aus der WO 2010/054959 A1 bekannten Spannvorrichtung erfolgt das Dehnen des Gewindebolzens mittels einer in das Gewinde des Gewindebolzens eingreifenden Wechselbuchse. Diese ist durch den Kolben der Spannvorrichtung axial mitnehmbar, indem die Wechselbuchse nahe ihres oberen Endes mit einem Außengewinde versehen ist, auf das ein von dem Kolben untergriffener Mitnehmerring aufschraubbar ist. Eine um die Wechselbuchse herum angeordnete Federanordnung stützt sich an dem Mitnehmerring und zusätzlich an der Wechselbuchse ab, die hierzu mit einer nach innen versetzten Stufe versehen ist. Um die Wechselbuchse auf den Gewindebolzen aufzuschrauben, wird die Spannvorrichtung auf die Schraubverbindung aufgesetzt und um ihre Achse gedreht, wodurch die Wechselbuchse auf den freien Gewindeabschnitt des Gewindebolzens aufgeschraubt wird. Ein solches Aufschrauben unter Drehen der Spannvorrichtung um ihre Achse ist zeitaufwendig und angesichts des Gewichts derartiger Schraubenspannvorrichtungen auch mühsam.

Für die Spannvorrichtungen nach der WO 2008/092768 A2 und der WO 2010/054959 A1 gilt jeweils, dass ein Austausch der Wechselbuchse, etwa gegen eine Wechselbuchse mit anderer Gewindegeometrie oder anderer Länge, mit einem relativ hohen Aufwand verbunden ist.

Ziel der Erfindung ist daher die Bereitstellung einer im Betrieb sicher arbeitenden Spannvorrichtung, bei der das Auf- und Abschrauben der Wechselbuchse, auch im Hinblick auf einen Austausch der Wechselbuchse, einfach und schnell erfolgen kann.

Hierzu ist eine gattungsgemäße Spannvorrichtung gekennzeichnet durch eine zweiteilige Ausbildung des Deckels aus einem Deckelgrundkörper und einem Verschlussdeckel, wobei der Deckelgrundkörper mit einer durch den Verschlussdeckel verschließbaren Öffnung versehen ist, deren radiale Weite größer ist als die radiale Weite des radial erweiterten Abschnitts der Wechselbuchse.

Eine so gestaltete Spannvorrichtung ermöglicht im Rahmen des Spannprozesses ein schnelles Auf- und Abschrauben der Wechselbuchse. Ein Austausch der Wechselbuchse, etwa gegen eine Wechselbuchse mit anderer Gewindegeometrie oder Länge, lässt sich einfach und schnell bewerkstelligen. Die Wechselbuchse lässt sich ohne größeren Aufwand nach oben aus der Spannvorrichtung herausnehmen, insbesondere ohne hierfür die Federanordnung ausbauen zu müssen. Durch den Wegfall von bei herkömmlichen Spannvorrichtungen erforderlichen Montageschritten lassen sich Schraubarbeiten an hochbelasteten Verschraubungen insgesamt einfacher und schneller erledigen.

Der Verschlussdeckel übt unter anderem eine Schutzfunktion aus. Denn er verhindert, dass im Falle eines Versagens der Wechselbuchse diese nach oben weggeschleudert wird und sie umherstehende Personen gefährden kann.

Gemäß einer Ausgestaltung liegt die Federanordnung, bei der es sich z. B. um in Reihenschaltung angeordnete Tellerfedern handeln kann, gegen eine an dem Kolben ausgebildete Federabstützung an. Bei dieser Ausgestaltung ist daher nicht die Wechselbuchse unmittelbar durch die Federanordnung federbelastet, sondern der Kolben. Auch diese Ausgestaltung trägt dazu bei, dass für das Einsetzen und Herausnehmen der Wechselbuchse keine Rücksicht auf die Federanordnung genommen werden muss.

Der radial erweiterte Abschnitt kann entweder ein an der Wechselbuchse unmittelbar angeformter Radialbund sein, oder ein mit dem Grundkörper der Wechselbuchse verschraubter Mitnehmerring, dessen Unterseite dann jene ringförmige Axialfläche bildet, mit der sich die Wechselbuchse axial gegen den Kolben abstützt, so dass sie durch den Kolben mitnehmbar ausgestaltet ist.

Gemäß einer weiteren Ausgestaltung setzt sich die Wechselbuchse aus drei Längsabschnitten zusammen, wobei der erste Längsabschnitt mit dem Innengewinde zum Aufschrauben auf den Gewindebolzen versehen ist, der zweite Längsabschnitt der radial erweiterte Abschnitt ist, und der dritte Längsabschnitt zapfenförmig gestaltet ist und eine Öffnung in der Oberseite der Spannvorrichtung ausfüllt.

Bevorzugt wird eine Ausgestaltung des zweiteiligen Deckels, bei der der Verschlussdeckel durch Drehen in der Öffnung des Deckelgrundkörpers verriegelbar ist. Als Verriegelung geeignet ist z. B. eine Drehverriegelung, etwa eine Bajonettverbindung zwischen Verschlussdeckel und Deckelgrundkörper.

Gemäß einer weiteren Ausgestaltung ist der Verschlussdeckel als Ringscheibe mit einer zu der Öffnung in dem Deckelgrundkörper koaxialen Öffnung ausgebildet, wobei die Öffnung in dem Verschlussdeckel durch einen zapfenförmigen Längsabschnitt der Wechselbuchse ausgefüllt wird.

Gemäß einer weiteren Ausgestaltung ist der zapfenförmige Längsabschnitt der Wechselbuchse mit einer Außenstirnfläche versehen, die im Ausgangszustand der Spannvorrichtung mit der Oberseite der Spannvorrichtung abschließt, wobei der zapfenförmige Längsabschnitt unterhalb der Außenstirnfläche mit einer Markierung versehen ist. Im Betrieb der Spannvorrichtung wird dem Bediener mit dem erstmaligen Sichtbarwerden der Markierung angezeigt, dass der Spannprozess und damit die Dehnung des Gewindebolzens ein bestimmtes axiales Maß erreicht hat.

Weitere Einzelheiten und Vorteile ergeben sich aus der nachfolgenden Beschreibung der auf der Zeichnung dargestellten Ausführungsbeispiele. Es zeigen:
- Fig. 1: in vereinfachter Schnittdarstellung eine hydraulisch arbeitende Gewindebolzen-Spannvorrichtung, aufgesetzt auf einen Gewindebolzen und abgestützt auf einer Unterlage, wobei ein Verschlussdeckel oberhalb der Spannvorrichtung wiedergegeben ist;
- Fig. 2: die Gegenstände nach Fig. 1 bei aus der Spannvorrichtung herausgenommener Wechselbuchse;
- Fig. 3: den oberen Teil einer zweiten Ausführungsform einer hydraulisch arbeitenden Gewindebolzen-Spannvorrichtung, hier bei herausgenommener Wechselbuchse;
- Fig. 4: eine im Vergleich zu der Ausführungsform nach den Figuren 1 - 3 alternative Variante für die Arretierung des Verschlussdeckels in dem Deckelgrundkörper;
- Fig. 5: eine im Vergleich zu der Ausführungsform nach den Figuren 1 - 3 alternative Variante für die Arretierung des Verschlussdeckels in dem Deckelgrundkörper;
- Fig. 6: eine im Vergleich zu der Ausführungsform nach den Figuren 1 - 3 alternative Variante für die Arretierung des Verschlussdeckels in dem Deckelgrundkörper;
- Fig. 7: eine im Vergleich zu der Ausführungsform nach den Figuren 1 - 3 alternative Variante für die Arretierung des Verschlussdeckels in dem Deckelgrundkörper;
- Fig. 8: eine im Vergleich zu der Ausführungsform nach den Figuren 1 - 3 alternative Variante für die Arretierung des Verschlussdeckels in dem Deckelgrundkörper;
- Fig. 9: eine im Vergleich zu der Ausführungsform nach den Figuren 1 - 3 alternative Variante für die Arretierung des Verschlussdeckels in dem Deckelgrundkörper;
- Fig. 10: eine im Vergleich zu der Ausführungsform nach den Figuren 1 - 3 alternative Variante für die Arretierung des Verschlussdeckels in dem Deckelgrundkörper.

Die hydraulisch betriebene Spannvorrichtung dient dem Anziehen und ggf. auch dem Lösen hochbelasteter Schraubverbindungen. Mit der Spannvorrichtung lässt sich in Bolzenlängsrichtung für eine gewisse Zeit eine vorgegebene Vorspannkraft auf den Gewindebolzen 3 aufbringen, um währenddessen eine auf den Gewindebolzen 3 aufgeschraubte Mutter 4 der Schraubverbindung anzuziehen bzw. nachzuziehen.

Eine in der Spannvorrichtung angeordnete Wechselbuchse 10 ist mit einem Innengewinde 11 versehen. Dieses Innengewinde wird auf den über die Mutter 4 hinaus vorstehenden Gewindeendabschnitt A des Gewindebolzens 3 aufgeschraubt. Anschließend wird die so auf den Gewindebolzen aufgeschraubte Wechselbuchse 10 hydraulisch unter Zug gesetzt, wodurch sich der Gewindebolzen 3 in Längsrichtung dehnt.

Umschlossen ist der Spannmechanismus durch ein Zylindergehäuse 1. Dieses kann sich auch modulartig aus mehreren Zylinderabschnitten zusammensetzen.

Die starre Fortsetzung des Zylindergehäuses 1 nach unten bildet ein die Mutter 4 umgebendes Stützrohr 2. Das Stützrohr 2 kann alternativ auch ein gegenüber dem Zylindergehäuse 1 separates, z. B. ein daran ansetzbares Bauteil sein.

Das Stützrohr 2 ist an seiner Unterseite offen und stützt sich auf jener Unterlage 8 ab, zumeist einem Maschinenteil, auf der sich auch die Mutter 4 abstützt. Außerdem kann ein durch eine Öffnung 9 in dem Stützrohr 2 hindurch arbeitendes Getriebe vorgesehen sein, mit dem sich die auf den Gewindebolzen 3 aufgeschraubte Mutter 4 drehen lässt. Dieses Drehen ist natürlich nur möglich, wenn die Spannvorrichtung arbeitet, und daher die Mutter 4 nicht durch erhebliche Reibung belastet ist.

Seitlich an dem druckfest ausgebildeten Zylindergehäuse 1 befindet sich ein Hydraulikanschluss 7, über den der hydraulische Arbeitsraum der Spannvorrichtung ventilgesteuert mit einer externen Hydraulikversorgung verbunden ist.

Das Zylindergehäuse 1 umfasst einen oder alternativ auch mehrere Hydraulikzylinder, die über den Hydraulikanschluss 7 und eine flexible, druckfeste Hydraulikleitung mit der externen Hydraulikversorgung verbunden sind. In jedem Hydraulikzylinder ist, zu der Zylinderinnenwandung hin abgedichtet, ein Kolben 5 in Längsrichtung beweglich angeordnet. Bei dem hier beschriebenen Ausführungsbeispiel ist nur eine Zylinderstufe und damit nur ein Kolben 5 vorhanden.

Durch Einspeisen von hydraulischem Druck in den Arbeitsraum wird der hydraulische Kolben 5 angehoben. Dies erfolgt entgegen der Druckkraft einer sich von oben her auf dem Kolben abstützenden Federanordnung 15. Die Federanordnung 15 besteht hier aus aufeinandergeschichteten und damit in Reihe geschalteten, ringförmigen Tellerfedern.

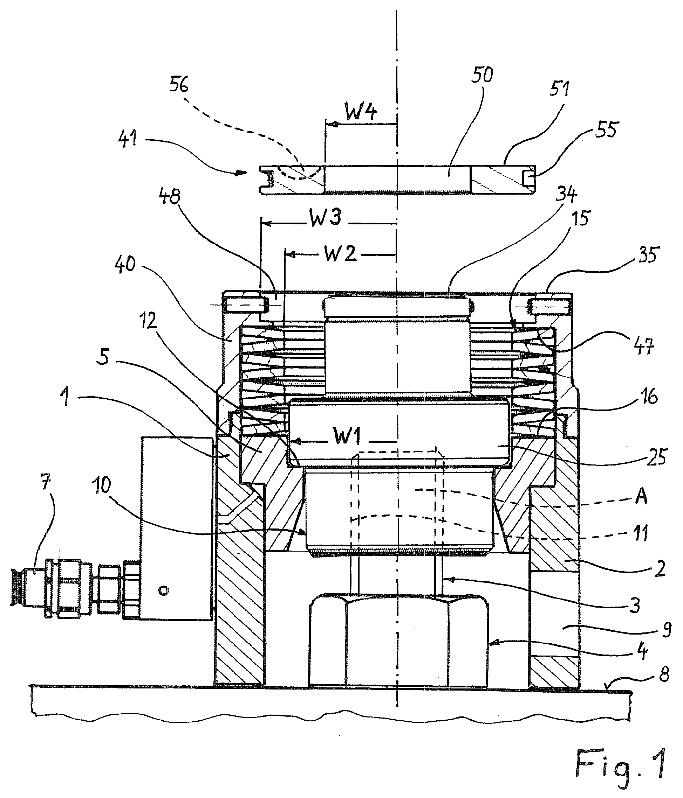

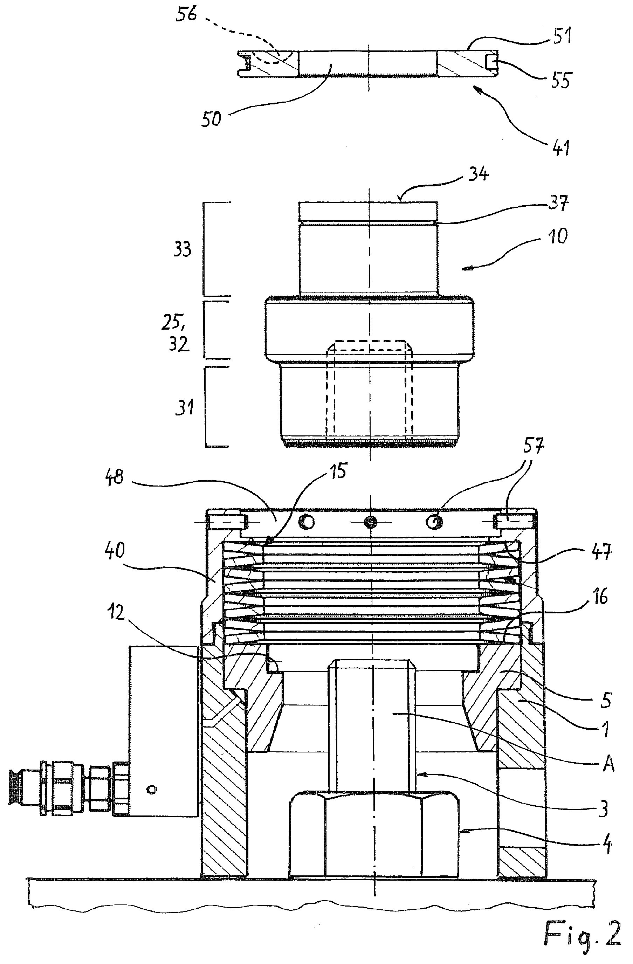

Die Federanordnung 15 drückt von oben auf eine unmittelbar an dem Kolben 5 ausgebildete Federabstützung 16 und beaufschlagt auf diese Weise den Kolben 5 unmittelbar mit einer Kraft die bestrebt ist, den Kolben 5 in seiner in Fig. 1 und Fig. 2 wiedergegebenen Grundstellung zu halten, in der der hydraulische Arbeitsraum sein Minimum hat.

Der Kolben 5 ist ringförmig und ist an seinem Innenrand mit einer vorzugsweise umlaufenden Stufe 12 versehen. Die Stufe 12 bildet, der Unterlage 8 abgewandt, eine Axialfläche, an der sich die Wechselbuchse 10 über einen daran einstückig angeformten, erweiterten Abschnitt 25 abstützt. Auf diese Weise ist die Wechselbuchse 10 durch den Kolben 5 axial mitnehmbar.

Die in Fig. 2 separat wiedergegebene Wechselbuchse 10 setzt sich, von der Unterlage 8 aus betrachtet, aus einem ersten Längsabschnitt 31, einem zweiten Längsabschnitt 32 und einem dritten Längsabschnitt 33 zusammen.

Auf dem ersten Längsabschnitt 31 weist die Wechselbuchse 10 das hoch belastbare Innengewinde 11 auf, welches durch Drehen der Wechselbuchse auf den Gewindeendabschnitt A des Gewindebolzens 3 aufschraubbar ist. Die axiale Länge des Innengewindes 11 und damit die zur Verfügung stehende Einschraubtiefe sollte mindestens gleich dem Gewindedurchmesser des Bolzens 3 sein, vorzugsweise das 1,5-fache des Gewindedurchmessers.

Der zweite Längsabschnitt 32 der Wechselbuchse 10 ist bei der Ausführungsform nach Fig. 1 und 2 als ein einstückig angeformter Bund gestaltet. Dieser Längsabschnitt 32 bildet zugleich den im Radius größten Abschnitt der Wechselbuchse. Er dient, wie bereits beschrieben, der axialen Abstützung der Wechselbuchse an dem Kolben 5.

Der dritte Längsabschnitt 33 ist zapfenförmig und von geringerem Durchmesser als der zweite Längsabschnitt 32, so dass zum Drehen der Wechselbuchse 10 diese an dem dritten Längsabschnitt 33 gut von Hand greifbar ist.

Den Abschluss der Wechselbuchse 10 bildet eine flache Außenstirnfläche 34. Bei dem hier beschriebenen Ausführungsbeispiel schließt die Außenstirnfläche 34 im Grundzustand der Spannvorrichtung in einer Ebene mit der Oberseite 35 der Spannvorrichtung ab. In der Stirnfläche 34 kann zentral ein Mehrkant zum motorischen Drehen der Wechselbuchse 10 ausgebildet sein. Alternativ besteht die Möglichkeit, den Längsabschnitt 33 soweit nach oben zu verlängern, dass dieser deutlich über die Oberseite 35 hinaus ragt und dort, zum Zwecke des Drehens der Wechselbuchse 10, von Hand gegriffen werden kann. Zu diesem Zweck kann der Längsabschnitt 33 mit einer reibungserhöhenden Riffelung versehen sein.

Unterhalb der Außenstirnfläche 34 ist an dem dritten Längsabschnitt 33 eine Markierung 37 in Gestalt einer Nut ausgebildet. Durch die Lage der Markierung 37 in Bezug auf die Oberseite 35 der Spannvorrichtung ist für den Benutzer optisch zu erkennen, wie weit der Spannprozess gediehen ist.

Um die Wechselbuchse 10 vollständig herausnehmen zu können, ohne zuvor einen Deckelgrundkörper 40 und die Federanordnung 15 entfernen zu müssen, weist die Wechselbuchse 10 eine maximale radiale Weite W1 auf, die geringer ist als die Innenweite W2 der ringförmigen Tellerfedern, aus denen die Federanordnung 15 zusammengesetzt ist. Dabei hat die Wechselbuchse 10 auf ihrem erweiterten Abschnitt 25 bzw. 32 ihren größten Durchmesser.

Die Wechselbuchse 10 einschließlich ihrer drei Längsabschnitte 31, 32, 33 ist bei der Ausführungsform nach Fig. 1 und 2 einstückig und vorzugsweise als ein Drehteil hergestellt, in dem zusätzlich nur noch das Innengewinde 11 gefertigt werden muss.

Den oberen Abschluss des Zylindergehäuses 1 bildet ein zweiteiliger Deckel, der sich aus dem ringförmig gestalteten Deckelgrundkörper 40 und einem Verschlussdeckel 41 zusammensetzt. An einer dem Kolben 5 zugewandten Unterseite des Deckelgrundkörpers 40 befindet sich die andere Federabstützung 47, also die Federabstützung für das dem Kolben 5 abgewandte Ende der Federanordnung 15. Der Deckelgrundkörper 40 des zweiteiligen Deckels ist fest mit dem Zylindergehäuse 1 verbunden, vorzugsweise durch Verschrauben mit dem Zylindergehäuse 1.

Der Deckelgrundkörper 40 ist in seiner Mitte mit einer runden Öffnung 48 zum Einsetzen des Verschlussdeckels 41 versehen. Die radiale Weite W3 dieser Öffnung 48 ist mindestens so groß, wie die radiale Weite W1 des erweiterten Abschnitts 25 der Wechselbuchse 10. Durch die Öffnung 48 des Deckelgrundkörpers 40 hindurch ist daher die komplette Wechselbuchse 10 austauschbar, wobei die Federanordnung 15 im Zylindergehäuse verbleibt.

Der Verschlussdeckel 41 ist als eine Ringscheibe mit einer zu der Öffnung 48 in dem Deckelgrundkörper 40 koaxialen Öffnung 50 der Weite W4 ausgebildet. Die Öffnung 50 im Verschlussdeckel 41 wird durch den zapfenförmig gestalteten Längsabschnitt 33 der Wechselbuchse 10 ausgefüllt. Insgesamt setzt sich daher die Oberseite der Spannvorrichtung zusammen aus der Oberseite 35 des Deckelgrundkörpers 40, der Oberseite 51 des ringförmigen Verschlussdeckels 41, und schließlich der Außenstirnfläche 34 der Wechselbuchse 10.

Da gemäß Fig. 1 der Durchmesser bzw. die radiale Weite W4 der Öffnung 50 des Verschlussdeckels 41 geringer ist, als die Weite W1 des radial erweiterten Abschnitts 25 der Wechselbuchse 10, kann bei gesichertem Verschlussdeckel 41 die Wechselbuchse 10 nicht nach oben hin aus der Spannvorrichtung herausgeschleudert werden. Zu einer solchen Situation kann es in Ausnahmefällen bei einem Versagen der Wechselbuchse kommen. Die Arretierung in Längsrichtung des Verschlussdeckels 41 in dem Deckelgrundkörper 40 ist daher ein wichtiges Sicherheitsmerkmal.

Der Verschlussdeckel 41 ist z. B. durch Drehen in der Öffnung 48 des Deckelgrundkörpers 40 verriegelbar. Hierzu sind bei der Ausführungsform nach Fig. 1 und 2 an dem Deckelgrundkörper 40 und am Verschlussdeckel 41 Elemente einer Drehverriegelung ausgebildet, hier einer Bajonettverriegelung. Der Drehwinkel bis zur Verriegelung ist gering und vorzugsweise 15° bis 60°. Hierzu sitzen bei dem hier beschriebenen Ausführungsbeispiel im Bereich der Öffnung 48 Zapfen 57, die nach Art eines Bajonetts in am Umfang des Verschlussdeckels 41 ausgebildete Nuten 55 verriegelnd eingreifen. Zum Verschließen des Verschlussdeckels 41 wird dieser von oben her in die Öffnung 48 eingesetzt, und sodann über einen Drehwinkel verdreht.

Hilfreich für das Drehen des Verschlussdeckels 41 sind Fingermulden 56 in der Oberseite 51 des Verschlussdeckels 41.

Eine weitere Sicherung des Verschlussdeckels 41 ist nicht erforderlich. Der Verschlussdeckel 41 ist auch nicht durch die Federanordnung 15 belastet. Letztere stützt sich axial ausschließlich an der Innenseite des Deckelgrundkörpers 40 ab, und nicht gegen den ringförmigen Verschlussdeckel 41.

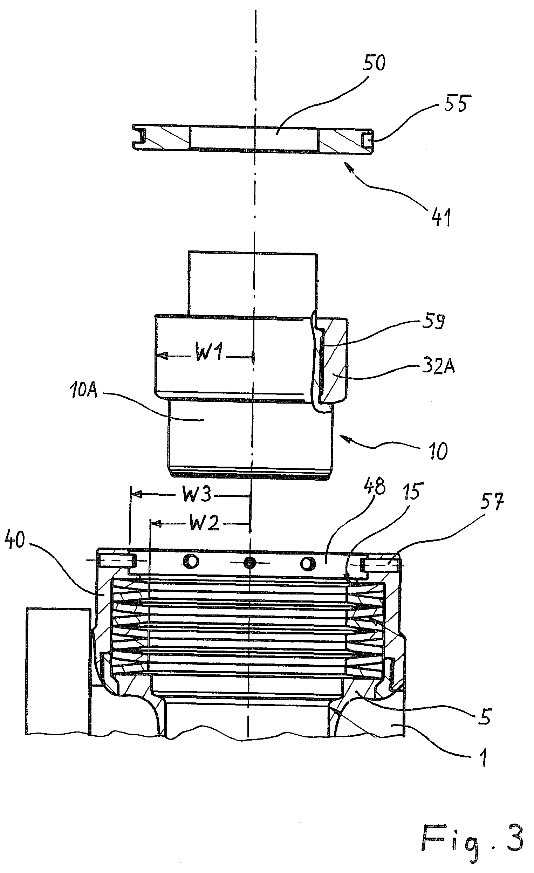

Die Fig. 3 zeigt eine andere Ausführungsform der Spannvorrichtung. Der einzige Unterschied zu der erstgenannten Ausführungsform besteht darin, dass die Wechselbuchse 10 zweiteilig ausgebildet ist, und sich aus einem Grundkörper 10A und einem von oben her auf ein Außengewinde 59 des Grundkörpers 10A aufschraubbaren Mitnehmerring 32A zusammensetzt. Auch bei dieser Ausführungsform ist die radiale Weite W3 der Öffnung 48 des Deckelgrundkörpers 40 und die radiale Innenweite W2 der Federanordnung 15 größer, als die radiale Weite W1 des den radial erweiterten Abschnitt bildenden Mitnehmerrings 32A.

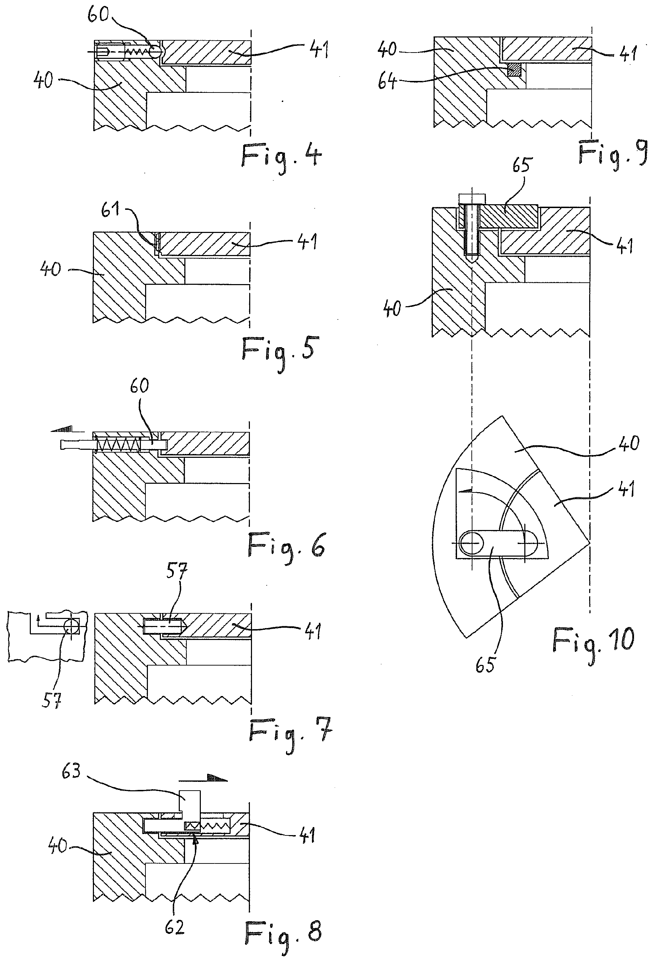

Die Figuren 4 - 10 zeigen verschiedene weitere Varianten, um den Verschlussdeckel 41 an dem Deckelgrundkörper 40 lösbar zu arretieren.

Bei Fig. 4 sitzt in dem Deckelgrundkörper 40 ein federbelastetes Arretierelement 60, welches in eine entsprechende Mulde am Umfang des Verschlussdeckels 41 federnd eingreift, und so den Deckel verriegelt.

Bei Fig. 5 ist der Verschlussdeckel 41 an seinem Umfang mit einem Außengewinde versehen, welches in ein entsprechendes Innengewinde des Deckelgrundkörpers 40 eingeschraubt ist, so dass sich eine Verschraubung 61 ergibt.

Bei Fig. 6 sitzt im Deckelgrundkörper 40 ein Arretierelement 60 in Gestalt eines federbelasteten Bolzens. Der Bolzen ragt mit einem Teil seiner Länge außen aus dem Deckelgrundkörper 40 heraus, und lässt sich daher zum Entsperren nach außen ziehen.

Bei Fig. 7 dient als Arretierelement ein Zapfen 57, welcher fest in dem Verschlussdeckel 41 sitzt, und nur über ein im Rand des Deckelgrundkörpers 40 ausgebildetes Bajonett durch leichtes Drehen entriegelbar ist.

Bei Fig. 8 sitzt ein federbelasteter Riegel 62 radial beweglich in dem Verschlussdeckel 41. Bestandteil des Riegels 62 ist eine Taste 63, welche durch Zug nach radial innen die Arretierung freigibt.

Bei Fig. 9 erfolgt die Sicherung des Verschlussdeckels 41 gegenüber dem Deckelgrundkörper 40 durch einen Magneten 64. Dieser kann wie dargestellt an dem Deckelgrundkörper 40 befestigt sein, oder alternativ an dem Verschlussdeckel 41.

Bei Fig. 10 schließlich erfolgt die Verriegelung des Verschlussdeckels 41 durch einen verschwenkbar an dem Deckelgrundkörper 40 gelagerten Riegel 65. Dargestellt ist der Riegel 65 jeweils in seiner Verriegelungsstellung.

### Bezugszeichenliste

- 1: Zylindergehäuse
- 2: Stützrohr
- 3: Gewindebolzen
- 4: Mutter
- 5: Kolben
- 7: Hydraulikanschluss
- 8: Unterlage
- 9: Öffnung
- 10: Wechselbuchse
- 10A: Grundkörper der Wechselbuchse
- 11: Innengewinde
- 12: Stufe
- 15: Federanordnung
- 16: Federabstützung
- 25: erweiterter Abschnitt
- 31: Längsabschnitt
- 32: Längsabschnitt
- 32A: Mitnehmerring
- 33: Längsabschnitt
- 34: Außenstirnfläche
- 35: Oberseite
- 37: Markierung
- 40: Deckelgrundkörper
- 41: Verschlussdeckel
- 47: Federabstützung
- 48: Öffnung
- 50: Öffnung
- 51: Oberseite
- 55: Nut
- 56: Fingermulde
- 57: Zapfen
- 59: Außengewinde
- 60: Arretierelement
- 61: Verschraubung
- 62: Riegel
- 63: Taste
- 64: Magnet
- 65: Riegel

- A: Gewindeendabschnitt
- W1: radiale Weite
- W2: Innenweite
- W3: radiale Weite
- W4: radiale Weite

## Patentansprüche

1. Spannvorrichtung zum Dehnen eines Gewindebolzens durch Zug an dessen Gewindeendabschnitt (A), mit einem gegen eine den Gewindebolzen umgebende Unterlage (8) als Widerlager abgestützten Stützrohr (2), einem in Verlängerung des Stützrohrs (2) angeordneten Zylindergehäuse (1) mit mindestens einem darin in Längsrichtung bewegbaren, mit einer Hydraulikversorgung verbindbaren Kolben (5), einer durch den Kolben (5) axial mitnehmbar ausgebildeten Wechselbuchse (10), welche zum Verschrauben mit dem Gewindeendabschnitt (A) des Gewindebolzens mit einem Innengewinde (11), und zum axialen Mitnehmen durch den Kolben (5) mit einem radial erweiterten Abschnitt (25) versehen ist, einer um die Wechselbuchse (10) herum angeordneten und den Kolben (5) axial beaufschlagenden Federanordnung (15), und einem an dem Zylindergehäuse (1) befestigten Deckel, an dessen Unterseite die andere Abstützung (47) der Federanordnung (15) ausgebildet ist, **gekennzeichnet durch** eine zweiteilige Ausbildung des Deckels aus einem Deckelgrundkörper (40) und einem Verschlussdeckel (41), wobei der Deckelgrundkörper (40) mit einer **durch** den Verschlussdeckel (41) verschließbaren Öffnung (48) versehen ist, deren radiale Weite (W3) größer ist als die radiale Weite (W1) des radial erweiterten Abschnitts (25) der Wechselbuchse (10).

2. Spannvorrichtung nach Anspruch 1, **dadurch gekennzeichnet, dass** die Innenweite (W2) der Federanordnung (15) größer ist die radiale Weite (W1) des radial erweiterten Abschnitts (25) der Wechselbuchse (10).

3. Spannvorrichtung nach Anspruch 1 oder 2, **dadurch gekennzeichnet, dass** die Federanordnung (15) gegen eine an dem Kolben (5) ausgebildete Federabstützung (16) anliegt.

4. Spannvorrichtung nach einem der Ansprüche 1 bis 3, **dadurch gekennzeichnet, dass** der radial erweiterte Abschnitt (25) ein an der Wechselbuchse (10) einstückig angeformter Radialbund ist.

5. Spannvorrichtung nach einem der Ansprüche 1 bis 3, **dadurch gekennzeichnet, dass** der radial erweiterte Abschnitt (25) ein mit dem Grundkörper (10A) der Wechselbuchse (10) verschraubter Mitnehmerring (32A) ist.

6. Spannvorrichtung nach einem der vorangehenden Ansprüche, **dadurch gekennzeichnet, dass** an dem radial erweiterten Abschnitt (25) eine vorzugsweise ringförmige Fläche ausgebildet ist, mit der sich die Wechselbuchse (10) axial an einer Stufe (12) des Kolbens (5) abstützt.

7. Spannvorrichtung nach einem der vorangehenden Ansprüche, **dadurch gekennzeichnet, dass** sich die Wechselbuchse (10) aus drei Längsabschnitten (31, 32, 33) zusammensetzt, wobei der erste Längsabschnitt (31) mit dem Innengewinde (11) versehen ist, der zweite Längsabschnitt (32) der radial erweiterte Abschnitt (25) ist, und der dritte Längsabschnitt (33) zapfenförmig gestaltet ist und eine Öffnung (50) in der Oberseite der Spannvorrichtung ausfüllt.

8. Spannvorrichtung nach einem der vorangehenden Ansprüche, **dadurch gekennzeichnet, dass** der Verschlussdeckel (41) durch Drehen in der Öffnung (48) des Deckelgrundkörpers (40) verriegelbar ist.

9. Spannvorrichtung nach einem der vorangehenden Ansprüche, **dadurch gekennzeichnet, dass** der Verschlussdeckel (41) als Ringscheibe mit einer zu der Öffnung (48) in dem Deckelgrundkörper (40) koaxialen Öffnung (50) ausgebildet ist, welche durch einen zapfenförmigen Längsabschnitt (33) der Wechselbuchse (10) ausgefüllt wird.

10. Spannvorrichtung nach Anspruch 9, **dadurch gekennzeichnet, dass** die größte radiale Weite (W1) der Wechselbuchse (10) größer als die radiale Weite (W4) der Öffnung (50) des Verschlussdeckels (41) ist.

11. Spannvorrichtung nach Anspruch 7, **dadurch gekennzeichnet, dass** der zapfenförmige Längsabschnitt (33) der Wechselbuchse mit einer Außenstirnfläche (34), die im Ausgangszustand der Spannvorrichtung mit der Oberseite (35) der Spannvorrichtung abschließt, und mit einer Markierung (37) unterhalb der Außenstirnfläche (34) versehen ist.

12. Spannvorrichtung nach einem der vorangehenden Ansprüche, **dadurch gekennzeichnet, dass** der Deckelgrundkörper (40) mit dem Zylindergehäuse (1) verschraubt ist.

## Claims

1. Tensioning device for stretching a threaded bolt by tension on its thread end portion (A), with
a supporting pipe (2) resting against a washer (8) surrounding the threaded bolt as an abutment;
a cylinder housing (1) arranged in the extension of the supporting pipe (2) and having at least one piston (5) which can be moved therein in a longitudinal direction and be connected to a hydraulic supply;
a changeover bush (10) which is configured to be able to be carried axially by the piston (5) and is provided with an internal thread (11) for bolting to the thread end portion (A) of the threaded bolt and with a radially widened portion (25) for being carried axially by the piston (5);
a spring arrangement (15) arranged around the changeover bush (10) and axially impacting the piston (5); and
a cover which is attached to the cylinder housing (1) and on the underside of which the other support (47) of the spring arrangement (15) is formed; **characterized by**
a two-piece configuration of the cover from a cover base body (40) and a closing cover (41), wherein the cover base body (40) is provided with an orifice (48) which can be closed by the closing cover (41) and the radial width (W3) of which is greater than the radial width (W1) of the radially widened portion (25) of the changeover bush (10).

2. Tensioning device according to claim 1, **characterized in that** the inner width (W2) of the spring arrangement (15) is greater than the radial width (W1) of the radially widened portion (25) of the changeover bush (10).

3. Tensioning device according to claim 1 or 2, **characterized in that** the spring arrangement (15) lies against a spring support (16) formed on the piston (5).

4. Tensioning device according to any of claims 1 to 3, **characterized in that** the radially widened portion (25) is a radial collar moulded integrally onto the changeover bush (10).

5. Tensioning device according to any of claims 1 to 3, **characterized in that** the radially widened portion (25) is a carrier ring (32A) bolted to the base body (10A) of the changeover bush (10).

6. Tensioning device according to any of the preceding claims, **characterized in that** a preferably annular face is formed on the radially widened portion (25), with which face the changeover bush (10) rests axially on a step (12) of the piston (5).

7. Tensioning device according to any of the preceding claims, **characterized in that** the changeover bush (10) is composed of three longitudinal portions (31, 32, 33), wherein the first longitudinal portion (31) is provided with the internal thread (11), the second longitudinal portion (32) is the radially widened portion (25), and the third longitudinal portion (33) is formed peg-like and fills an orifice (50) in the top of the tensioning device.

8. Tensioning device according to any of the preceding claims, **characterized in that** the closing cover (41) can be locked in the orifice (48) of the cover base body (40) by rotation.

9. Tensioning device according to any of the preceding claims, **characterized in that** the closing cover (41) is formed as a ring disc with an orifice (50) which is coaxial to the orifice (48) in the cover base body (40) and which is filled with a peg-like longitudinal portion (33) of the changeover bush (10).

10. Tensioning device according to claim 9, **characterized in that** the largest radial width (W1) of the changeover bush (10) is greater than the radial width (W4) of the orifice (50) of the closing cover (41).

11. Tensioning device according to claim 7, **characterized in that** the peg-like longitudinal portion (33) of the changeover bush is provided with an outer end face (34), which in the starting state of the tensioning device terminates with the top (35) of the tensioning device, and with a marking (37) below the outer end face (34).

12. Tensioning device according to any of the preceding claims, **characterized in that** the cover base body (40) is bolted to the cylinder housing (1).

## Revendications

1. Dispositif de tensionnement pour le serrage d'un boulon fileté par traction au niveau de sa section terminale de filetage (A), avec un tube d'appui (2) appuyant contre un support (8) entourant le boulon fileté sous la forme d'un contre-palier, avec un carter de cylindre (1) disposé dans le prolongement du tube d'appui (2), avec au moins un piston (5) mobile à l'intérieur dans la direction longitudinale pouvant être relié à une alimentation hydraulique, avec une douille interchangeable (10) réalisée avec possibilité d'entraînement dans le plan axial par le piston (5), ladite douille étant pourvue d'un filet intérieur (11) pour le vissage avec la section terminale de filetage (A) du boulon fileté et d'une section (25) élargie dans le plan radial pour l'entraînement axial à travers le piston (5), avec un agencement de ressort (15) disposé autour de la douille interchangeable (10) et chargeant le piston (5) dans le plan axial et avec un cache fixé au carter de cylindre (1) au niveau du côté inférieur duquel l'autre appui (47) de l'agencement de ressort (15) est réalisé, **caractérisé par** un façonnage du cache en deux parties dont un corps de base de cache (40) et un cache de fermeture (41), le corps de base de cache (40) étant pourvu d'une ouverture (48) pouvant être fermée par le cache de fermeture (41) dont la distance radiale (W3) est supérieure à la distance radiale (W1) de la section (25) élargie dans le plan radial de la douille interchangeable (10).

2. Dispositif de tensionnement selon la revendication 1, **caractérisé en ce que** la distance intérieure (W2) de l'agencement de ressort (15) est supérieure à la distance radiale (W1) de la section (25) élargie dans le plan radial de la douille interchangeable (10).

3. Dispositif de tensionnement selon la revendication 1 ou 2, **caractérisé en ce que** l'agencement de ressort (15) repose contre un appui de ressort (16) réalisé au niveau du piston (5).

4. Dispositif de tensionnement selon l'une quelconque des revendications 1 à 3, **caractérisé en ce que** la section (25) élargie dans le plan radial est un collet radial formé d'un seul tenant au niveau de la douille interchangeable (10).

5. Dispositif de tensionnement selon l'une quelconque des revendications 1 à 3, **caractérisé en ce que** la section (25) élargie dans le plan radial est une bague d'entraînement (32A) vissée au corps de base (10A) de la douille interchangeable (10).

6. Dispositif de tensionnement selon l'une quelconque des revendications précédentes, **caractérisé en ce qu'**une surface de préférence de forme annulaire est réalisée au niveau de la section (25) élargie dans le plan radial, la douille interchangeable (10) appuyant dans le plan axial avec ladite surface contre une marche (12) du piston (5).

7. Dispositif de tensionnement selon l'une quelconque des revendications précédentes, **caractérisé en ce que** la douille interchangeable (10) se compose de trois sections longitudinales (31, 32, 33), la première section longitudinale (31) étant pourvue du filet intérieur (11), la deuxième section longitudinale (32) étant la section (25) élargie dans le plan radial et la troisième section longitudinale (33) étant réalisée en forme de tenon et remplissant une ouverture (50) prévue dans le côté supérieur du dispositif de tensionnement.

8. Dispositif de tensionnement selon l'une quelconque des revendications précédentes, **caractérisé en ce que** le cache de fermeture (41) peut être verrouillé par pivotement dans l'ouverture (48) du corps de base de cache (40).

9. Dispositif de tensionnement selon l'une quelconque des revendications précédentes, **caractérisé en ce que** le cache de fermeture (41) est réalisé sous la forme d'un disque annulaire avec une ouverture (50) coaxiale par rapport à l'ouverture (48) pratiquée dans le corps de base de cache (40), ladite ouverture coaxiale étant remplie par une section longitudinale (33) en forme de tenon de la douille interchangeable (10).

10. Dispositif de tensionnement selon la revendication 9, **caractérisé en ce que** la plus grande distance radiale (W1) de la douille interchangeable (10) est supérieure à la distance radiale (W4) de l'ouverture (50) du cache de fermeture (41).

11. Dispositif de tensionnement selon la revendication 7, **caractérisé en ce que** la section longitudinale (33) en forme de tenon de la douille interchangeable est pourvue d'une surface frontale extérieure (34) se finissant, dans l'état de départ du dispositif de tensionnement, avec le côté supérieur (35) du dispositif de tensionnement et d'un marquage (37) prévu en dessous de la surface frontale extérieure (34).

12. Dispositif de tensionnement selon l'une quelconque des revendications précédentes, **caractérisé en ce que** le corps de base de cache (40) est vissé au carter de cylindre (1).
